# EUROPÄISCHE PATENTSCHRIFT

(11) **EP 1 210 530 B1**
(45) Veröffentlichungstag und Bekanntmachung des Hinweises auf die Patenterteilung: **12.02.2003**
(21) Anmeldenummer: 00956240.6
(22) Anmeldetag: 21.07.2000
(51) Int. Cl.: F16H 25/18

(54) **ZWISCHENLAGE FÜR AXIALSTELLGETRIEBE**
SEPARATOR FOR AN AXIAL ACTUATOR
PIECE D'ECARTEMENT POUR REDUCTEUR DE POSITIONNEMENT AXIAL

(30) Priorität: 06.09.1999 DE 19942462
(43) Veröffentlichungstag der Anmeldung: 05.06.2002
(73) Patentinhaber: Torrington Nadellager GmbH, 33790 Halle Westf. (DE)
(72) Erfinder: WEISSFLOG, Dietmar, D-33378 Rheda-Wiedenbrück (DE)
(74) Vertreter: Fischer, Matthias, Dipl.-Ing.
(86) Internationale Anmeldenummer: EP0006993
(87) Internationale Veröffentlichungsnummer: WO01018426

(56) Entgegenhaltungen:
- WO-A-00/03157
- DE-B- 1 298 811
- DE-B- 2 457 886
- US-A- 4 420 987

## Beschreibung

Die vorliegende Erfindung betrifft eine Zwischenlage für Axialstelltriebe mit zwei Stellringen, die, wenigstens drei Paare gegeneinander beweglicher, wendelförmiger Lauf- oder Gleitbahnen aufweisen entsprechend dem Oberbegriff des Anspruchs 1. Axialstelltriebe, in denen die genannten Zwischenlagen zur Verwendung kommen, werden beispielsweise für Getriebe, Bremsen, Kupplungen, Sperrdifferentiale, Spanner, Pressen u.dgl. eingesetzt.

Eine gattungsgemäße Zwischenlage ist bereits aus der US 4 420 987A bekannt.

Aus der DE 24 57 886 B1 ist eine Einrichtung zur relativen Axialbewegung zweier Wellenteile bekannt, bei der eine dynamische Axialbewegung zur Erzeugung eines periodischen Axialhubes durch eine rotierende Welle bewirkt wird, wobei der Axialhub wahlweise ausgekuppelt werden kann. Diese Einrichtung hat in allen Ausführungsbeispielen nur einen Wälzkörper und nur an einem Seitenteil eine oder mehrere Wendellaufbahnen, die jeweils die Funktion einer Steuerkurve zur Bestimmung des Zeitfaktors für den Hub darstellt/darstellen. Die bei der DE 24 57 886 B1 beschriebene unterschiedliche Steuerung der relativen Axialbewegung der beiden Wellenteile wird dadurch erreicht, daß entweder die eine oder die andere wendelförmige Rollbahn eingesetzt wird, um jeweils unterschiedliche Steigungen für unterschiedliche Anwendungszwecke einsetzen zu können. Die hiermit bekannte Einrichtung ist kein Axialstelltrieb im strengen Sinn und behandelt damit auch das Thema der reibungsarmen Bewegung von Stellringen eines Axialstelltriebs zueinander nicht.

Axialstelltriebe werden dann verwendet, wenn eine Drehbewegung auch auf sehr engem Raum und unter sehr großen Kräften in eine Längsbewegung umgesetzt werden soll. Axialstelltriebe haben zueinander zeigende wendelförmige Bahnen, die im Bereich einer Zylindermantelfläche um eine Zylinderaxialachse herum angeordnet sind. Es handelt sich bei der jeweiligen Bahnform eigentlich um Keile, die sozusagen um eine Achse "herumgewickelt" sind. Eine Bewegung zweier gegenüberliegender Keile gegeneinander, das bedeutet im vorliegenden Fall eine Drehung der beiden Stellringe des Axialtriebs gegeneinander, bewirkt, dass die Stellringe eine Relativbewegung zueinander, d. h. eine Bewegung aufeinander zu oder voneinander weg vollziehen, und zwar in Richtung der Axialachse des Axialstelltriebs. Dabei kann durch eine geringe Drehung über die Keilfläche der Wendelformen eine Axialbewegung erreicht werden, die als Hub- oder Schaltbewegung für eine der oben genannten Vorrichtungen vorgesehen ist. In einer Ausführungsform eines Axialstelltriebs mit treppen- oder sägezahnartig hintereinander geschalteten wendelförmigen Lauf- oder Gleitbahnen ergibt sich das Problem, geeignete Zwischenlagen zu finden, die die üblicherweise mit Axialstelltrieben zu übertragende sehr hohe Kraft möglichst reibungsfrei über die Stellringe übertragen lassen.

Um die Reibung zwischen Stellringen von Axialstelltrieben zu verringern, wird in der Regel ein Gleitmittel, beispielsweise Graphit oder hochzähes Fett verwendet. Oft werden Stellringe auch aus Bronzelegierungen o. dgl. hergestellt, um bei verschlissenem Schmiermittel gewisse Notlaufeigenschaften zu garantieren. Die Verwendung von pastösen, flüssigen oder pulverartigen Schmiermitteln scheint zwar einerseits die kostengünstigste zu sein, sie hat jedoch die Nachteile, dass ein zuverlässig sicherer Betriebszustand eines Axialstelltriebs einen aufwendigen regelmässigen Kundendienst erforderlich macht. Bei vielen Anwendungen derartiger Axialstelltriebe ist dies jedoch praktisch nicht durchführbar und damit unerwünscht. Somit werden Mittel gesucht, die eine zuverlässige Betriebsbereitschaft von Axialstelltrieben ermöglichen.

Es ist eine Aufgabe der Erfindung, eine Zwischenlage für Axialstelitriebe mit wendelförmig hintereinander angeordneten Lauf- oder Gleitbahnen zu schaffen, die günstig herstellbar ist und die Reibung zwischen den Stellringen sehr stark reduziert.

Die Aufgabe wird gelöst mit einer Zwischenlage gemäß Anspruch 1. Die erfindungsgemäß ausgebildete Zwischenlage mit wendelförmigen, miteinander verbundenen, der Form der Lauf- oder Gleitbahnen folgenden Abstandhaltern verhindert zuverlässig ein direktes gegenseitiges Berühren der beiden Stellringe. Dadurch, dass die Abstandhalter die Friktion zwischen den Stellringen verringerte Eigenschaften haben, sind die Notlaufbedingungen zwischen den Stellringen wesentlich besser als bei aus dem Stand der Technik bekannten Axialstelltrieben. Sind in vorteilhafter Weise die Abstandhalter aus einem Gleitwerkstoff, der naturgemäß weicher ist als die Stellringe des Axialstelltriebs, können diese bzw. deren Kontur sich mit hohem Druck gegen die aus Gleitwerkstoff bestehende Zwischenlage anlegen und nahezu reibungslos Kräfte übertragen. In einer vorteilhaften Weiterbildung der Erfindung sind die wendeiförmigen Wendelflächen etwa in der Breite der Lauf- oder Gleitbahnen der Stellringe mit einer zylindrischen Hülse einstückig verbunden, die von geeigneten Mitteln des Axialstelltriebs, zylindrisch zentriert, geführt werden. Um eine zusätzliche radiale Führung der Stellringe zueinander zu schaffen, können auf der radial innen und außen liegenden Umfangsfläche der Wendelflächen der erfindungsgemäßen Zwischenlage Hülsen aus demselben Gleitwerkstoffmaterial vorgesehen werden, aus dem die Abstandhalter selbst sind.

In einer anderen vorteilhaften Weiterbildung der Erfindung können die Abstandhalter in Art eines Wälzkörperkäfigs ausgebildet sein, die derselben Wendelform, wie soeben beschrieben, folgen, jedoch Wälzkörpertaschen aufweisen, in denen über die axiale Begrenzung der Wendelflächen ragende Wälzkörper getragen werden, die die beim Betrieb des Axialstelltriebs zu übertragenden Kräfte axial unter Rollreibung übertragen. Auch hier können die als Wendelkäfig zu bezeichnenden Abstandhalter über innere und/oder äußere Radialhaltehülsen jeweils in der richtigen Position gehalten werden. Der oben genannte Abstandhalter aus Gleitwerkstoff sowie der danach beschriebene Abstandhalter als Wälzkörper tragender Abstandhalterkäfig können in einer weiteren vorteilhaften Ausbildung so gestaltet sein, dass die einzelnen Wendelflächen an ihrem oberen Ende jeweils mit dem unteren Ende der folgenden Wendelflächen sozusagen über den dazwischenliegenden Treppenabsatz verbunden sind. Damit erübrigen sich die zuvor beschriebenen Hülsen. Dies kann in der einen oder anderen Anwendungsform von Vorteil sein.

Weitere Vorteile und Merkmale der Erfindung sind den Unteransprüchen zu entnehmen. Zur Veranschaulichung der Erfindung wird sie in beispielhafter Weise anhand der Zeichnungen weiter erläutert.
- Fig. 1: zeigt stark schematisiert eine erfindungsgemäße Zwischenlage in Axialrichtung gesehen.
- Fig. 2: zeigt die in Fig. 1 dargestellte Zwischenlage im Aufriß.
- Fig. 3: zeigt die in Fig. 1 dargestellte Zwischenlage geschnitten entlang der Linie A-A.
- Fig. 4: zeigt in schematischer Darstellung stark vereinfacht die Zuordnung zweier Stellringe eines Axialstelltriebs.
- Fig. 5: zeigt verschiedene Ausführungsbeispiele der erfindungsgemäßen Zwischenlage.
- Fig. 6: zeigt ein weiteres Ausrührungsbeispiel einer erfindungsgemäßen Zwischenlage.
- Fig. 7: zeigt schematisch ein Beispiel einer erfindungsgemäßen Zwischenlage mit Abstandhaltern, die Wälzkörper tragen.
- Fig. 8: zeigt weitere Ausführungsbeispiele einer erfindungsgemäßen Zwischenlage mit Wälzkörpern und radial zentrierenden Hülsen.
- Fig. 9: zeigt ein weiteres Ausführungsbeispiel der erfindungsgemäßen Zwischenlage mit einem, Wälzkörper tragenden Abstandhalter.

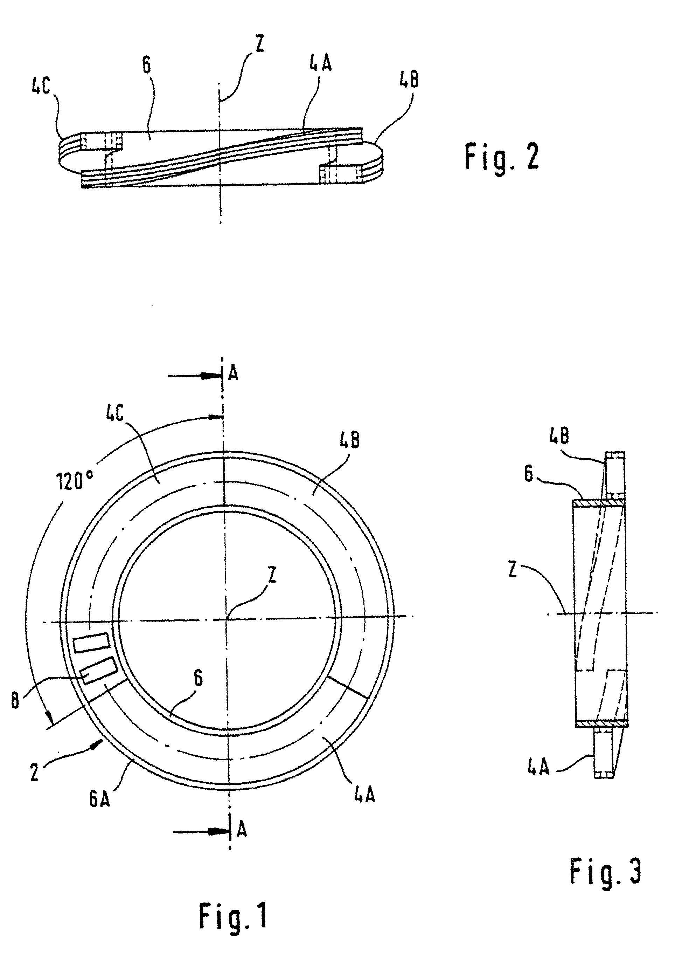

Fig. 1 zeigt eine Zwischenlage 2, ausgebildet mit drei wendelförmigen Abstandhaltern 4A, 4B und 4C, die in diesem Ausführungsbeispiel jeweils eine Kreisbogenlänge von etwa 120° haben. Im linken unteren Bereich des Abstandhalters 4C sind schematisch zwei Wälzkörper 8 dargestellt, auf die später noch eingegangen wird. Fig. 2 zeigt die in Fig. 1 dargestellte Zwischenlage 2 von der Seite. In dieser Darstellung ist der wendeiförmige Verlauf der Abstandhalter 4A, 4B und 4C sehr gut erkennbar. Hier nur gestrichelt dargestellt ist eine zylindrische Hülse 6, mit der die Abstandhalter einstückig verbunden sein können. Fig. 3 zeigt die in Fig. 1 dargestellte Zwischenlage 2, geschnitten entlang der Linie A-A. Auch in dieser Darstellung ist der Verlauf der Abstandhalter 4A und 4B um eine Zentralachse Z gut erkennbar. Die hier beispielhaft dargestellte, mit den Abstandhaltern 4A, 4B und 4C verbundene Hülse 6 ist ebenfalls in beispielhafter Dicke gezeigt.

Die in den Fig. 1 bis 3 dargestellte Zwischenlage 2 ist für einen Axialstelltrieb mit drei aufeinanderfolgenden wendelförmigen Lauf- oder Gleitbahnen vorgesehen. Es ergibt sich bei einem derart ausgestalteten Axialstelltrieb kein Kippmoment um die Zentralachse Z, da die Stellringe des Axialstelltriebs in einer schematisch idealisiert als Dreipunktauflage bezeichneten Stellung aneinanderliegen.

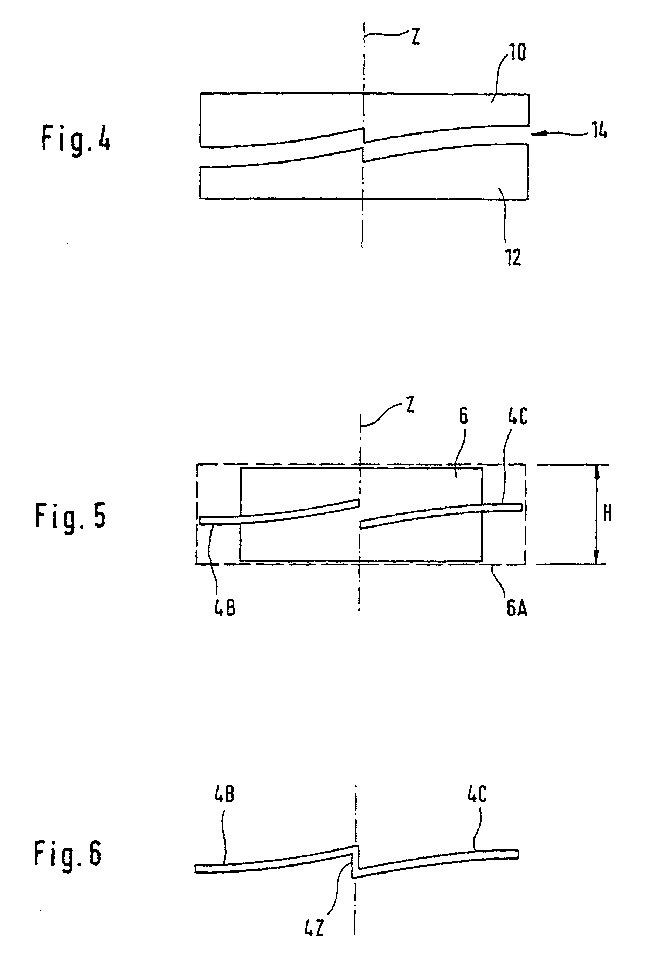

Die im folgenden beschriebenen Fig. 4 bis 9 zeigen jeweils eine Ansicht, die der Ansicht entsprechen würde, wenn man die in Fig. 1 dargestellte Zwischenlage in der Zeichenebene der Fig. 1 von oben nach unten gesehen anblickt. Diese Darstellungsweise ist aus Gründen der Vereinfachung gewählt. Fig. 4 zeigt zwei schematisch dargestellte Stellringe 10 (oberer Stellring) und 12 (unterer Stellring). Zwischen beiden Stellringen erkennbar ist ein beim Stand der Technik mit Schmiermittel ausgefüllter Zwischenraum 14, der entsprechend den wendeiförmigen Lauf- oder Gleitbahnen des Axialstelltriebs ebenfalls wendeiförmig ausgebildet ist. Fig. 5 zeigt wendelförmig ausgebildete Abstandhalter 4B und 4C, die um die bereits beschriebene Hülse 6 angeordnet verlaufen. Fig. 5 zeigt außerdem eine gestrichelt dargestellte Hülse 6A, die zusätzlich zur dargestellten Hülse 6 vorgesehen werden kann. Die Draufsicht auf eine derartige Hülse 6A ist ebenfalls in der Darstellung nach Fig. 1 gezeigt. Die Höhe H der Hülsen 6, 6A der in Fig. 5 dargestellten Zwischenlage 2 ist abhängig von der zweckmäßigen Höhe des Axialstelltriebs wählbar und hier nur beispielhaft angedeutet. Fig. 6 zeigt ein weiteres Ausführungsbeispiel einer erfindungsgemäßen Zwischenlage, bei der die einzelnen Wendelflächen 4A, 4B und 4C an ihrem axial "oberen" Ende jeweils mit dem "unteren" Ende der folgenden Wendelflächen über sogenannte Absätze 4Z verbunden sind. Wie aus der Darstellung nach Fig. 6 zu erkennen ist, erübrigt sich in einer derartigen Ausführungsform das Vorsehen einer Hülse 6 oder 6A.

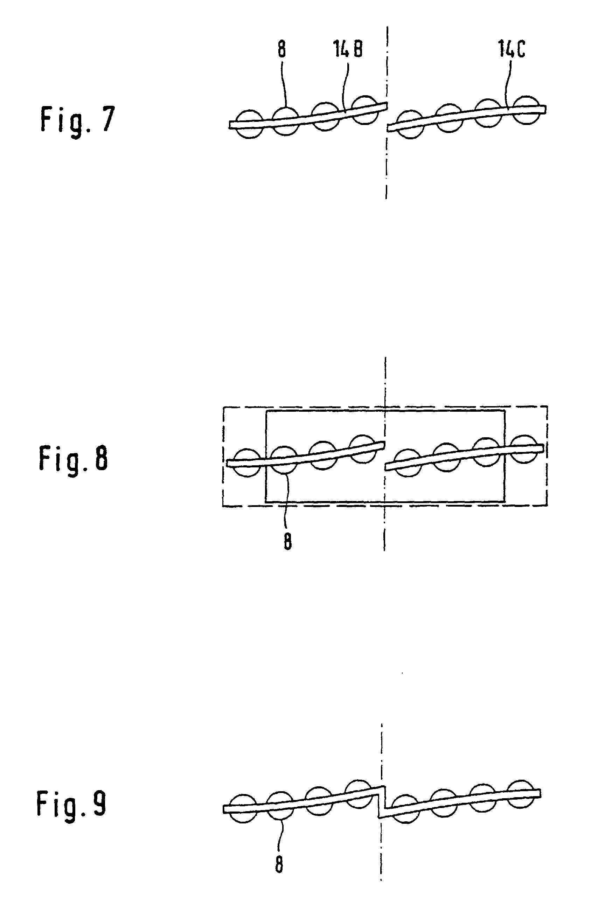

Fig. 7 zeigt eine Ausführungsform einer erfindungsgemäßen Zwischenlage in Art eines Wälzlagerkäfigs, in die Wälzkörper 8 in dafür geeignete Wälzkörpertaschen, die nicht besonders angedeutet sind, eingesetzt sind. Die Abstandhalter 14A, 14B, 14C der in den Fig. 7 bis 9 dargestellten Ausbildungen der Zwischenlagen können, müssen jedoch nicht aus Gleitwerkstoff gefertigt sein. Sollte jedoch die Möglichkeit bestehen, dass aufgrund einer lebensdauergekapselten Ausführungsform eines Axialstelltriebs die darin angeordneten Wälzkörper in ihrem Durchmesser die Dicke des Abstandhalters annehmen oder unterschreiten können, so wäre es zweckmäßig, den Abstandhalterwerkstoff aus Gleitwerkstoff auszuführen, so dass hier doch auch eine gewisse Notlaufeigenschaft gegeben ist.

Die Ausführungsformen gemäß den Fig. 8 und 9 entsprechen im Prinzip den Ausführungsformen der Fig. 5 und 6, nur mit dem Unterschied, dass die Ausführungsbeispiele gemäß Fig. 8 und 9 Wälzkörper 8 beinhalten, die, wie auch in Fig. 1 zu erkennen ist, in den Abstandhalterflächen angeordnet sind.

Die Abstandhalter können, wie bereits erwähnt, aus Gleitwerkstoff, wie einer Bronzelegierung oder einem besonders geeigneten Kunststoff oder einem anderen Material, z. B. Metall, Nichteisenmetall, ausgebildet sein.

## Patentansprüche

1. Zwischenlage für Axialstelltriebe mit zwei Stellringen, die wenigstens drei Paare gegeneinander beweglicher, wendelförmiger Lauf- oder Gleitbahnen aufweisen, **gekennzeichnet durch**
wenigstens drei wendelförmige, miteinander verbundene, der Form der Lauf- oder Gleitbahnen folgende, die Friktion zwischen den Stellringen (10, 12) verringernde Abstandhalter (4A, 4B, 4C), wobei eine Drehung des einen Stellringes eine Axialbewegung des anderen Stellringes bewirkt.

2. Zwischenlage nach Anspruch 1, **dadurch gekennzeichnet, daß** die Abstandhalter (4A, 4B, 4C) aus einem Gleitwerkstoff bestehen.

3. Zwischenlage nach Anspruch 2, **gekennzeichnet durch**,
a) drei wendelförmige, jeweils einen Kreisbogenabschnitt von etwa 120° beschreibende Wendel-Flächen (4A, 4B, 4C) in etwa der Breite der Lauf- oder Gleitbahnen, und
b) wenigstens eine zylindrische Hülse (6),
c) wobei die Wendel-Flächen am inneren oder äußeren Umfang der wenigstens einen zylindrischen Hülse (6) befestigt sind.

4. Zwischenlage nach Anspruch 2, **gekennzeichnet durch**,
a) drei wendelförmige, jeweils einen Kreisbogenabschnitt von etwa 120° beschreibende Wendel-Flächen (4A, 4B, 4C) in etwa der Breite der Lauf- oder Gleitbahnen, und
b) zwei zylindrische konzentrische Hülsen (6, 6A) unterschiedlichen Durchmessers,
c) wobei die Wendel-Flächen zwischen den zylindrischen Hülsen (6, 6A) befestigt sind.

5. Zwischenlage nach Anspruch 2, **gekennzeichnet durch** drei wendelförmige, ansteigende, jeweils einen Kreisbogenabschnitt von etwa 120° beschreibende Wendel-Flächen in etwa der Breite der Lauf- oder Gleitbahnen, wobei die einzelnen Wendel-Flächen an ihrem oberen Ende jeweils mit dem unteren Ende der folgenden Wendelflächen verbunden sind.

6. Zwischenlage nach Anspruch 1, **dadurch gekennzeichnet, daß** die Abstandhalter (4A, 413, 4C)
a) einen Käfig in Form von drei wendeiförmig ansteigenden, jeweils einen Kreisbogenabschnitt von etwa 120° beschreibenden Wendel-Flächen in etwa der Breite der Lauf- oder Gleitbahnen aufweisen,
b) der Käfig in herkömmlicher Weise mit ihm verbundene Wälzkörper aufweist.

7. Zwischenlage nach Anspruch 6, **gekennzeichnet durch**,
a) wenigstens eine zylindrische Hülse,
b) wobei die Wendel-Flächen am inneren oder äußeren Umfang der wenigstens einen zylindrischen Hülse befestigt sind.

8. Zwischenlage nach Anspruch 6, **gekennzeichnet durch**,
a) zwei zylindrische konzentrische Hülsen unterschiedlichen Durchmessers,
b) wobei die Wendel-Flächen zwischen den zylindrischen Hülsen befestigt sind.

9. Zwischenlage nach Anspruch 6, **dadurch gekennzeichnet, daß** die einzelnen Wendel-Flächen an ihrem oberen Ende jeweils mit dem unteren Ende der folgenden Wendelflächen verbunden sind.

10. Zwischenlage nach einem der Ansprüche 2 bis 5, **dadurch gekennzeichnet, daß** der Gleitwerkstoff aus einer Bronzelegierung oder einem Kunststoff besteht.

11. Zwischenlage nach einem der Ansprüche 6 bis 9, **dadurch gekennzeichnet, daß** die Wälzkörper (8) Rollen oder Nadeln sind.

## Claims

1. A separator for axial actuators including two positioner rings comprising at least three pairs of spiral raceways each movable contrary to the other comprising three spacers (4A, 4B, 4C) at least spirally interconnected to comply with the shape of the raceways in reducing the friction between said positioner rings (10, 12), whereby rotation of one positioner ring results in axial motion of the other positioner ring.

2. The separator as set forth in claim 1 wherein said spacers (4A, 4B, 4C) are made of a friction-reducing material.

3. The separator as set forth in claim 2, comprising
a) three spiral surfaces (4A, 4B, 4C) each describing a circular arc of approx. 120° in roughly the width of said raceways and
b) at least one cylindrical sleeve(6),
c) whereby said spiral surfaces are secured to the inner or outer circumference of said at least one cylindrical sleeve (6).

4. The separator as set forth in claim 2, comprising
a) three spiral surfaces (4A, 4B, 4C) each describing a circular arc of approx. 120° in roughly the width of said raceways and
b) two cylindrical concentric sleeves (6, 6A) differing in diameter,
c) whereby said spiral surfaces are secured between said cylindrical sleeves (6, 6A).

5. The separator as set forth in claim 2 comprising three spirally ascending spiral surfaces each describing a circular arc of approx. 120° in roughly the width of said raceways, whereby each spiral surface is connected at its upper end to the lower end of the adjoining spiral surface.

6. The separator as set forth in claim 1 wherein said spacers (4A, 4B, 4C) comprise
a) a cage complying to said three spirally ascending spiral surfaces each describing a circular arc of approx. 120° in roughly the width of said raceways,
b) said cage comprising rolling elements conventionally connected thereto.

7. The separator as set forth in claim 6 comprising
a) at least one cylindrical sleeve,
b) whereby said spiral surfaces are secured to the inner or outer circumference of said at least one cylindrical sleeve.

8. The separator as set forth in claim 6 comprising
a) two cylindrical concentric sleeves differing in diameter,
b) whereby said spiral surfaces are secured between said cylindrical sleeves.

9. The separator as set forth in claim 6 wherein each spiral surface is connected at its upper end to the lower end of the adjoining spiral surface.

10. The separator as set forth in any of the claims 2 to 5 wherein said friction-reducing material is a bronze alloy or a plastics material.

11. The separator as set forth in any of the claims 6 to 9 wherein said rolling elements (8) are rollers or needles.

## Revendications

1. Pièce d'écartement pour réducteur de positionnement axial comportant deux bagues de réglage qui présentent au moins trois paires de voies de roulement ou de glissières réciproquement mobiles en forme de colimaçon,
**caractérisée par**
au moins trois écarteurs (4A, 4B, 4C) en forme de colimaçon et reliés entre eux, qui suivent la forme des voies de roulement ou des glissières et diminuent la friction entre les bagues de réglage (10, 12), la rotation d'une des bagues de réglage provocant un mouvement axial de l'autre bague de réglage.

2. Pièce d'écartement selon la revendication 1, **caractérisée en ce que** les écarteurs (4A, 4B, 4C) consistent en un matériau glissant.

3. Pièce d'écartement selon la revendication 2, **caractérisée par**
a) trois surfaces hélicoïdales (4A, 4B, 4C) en colimaçon de la largeur approximative des voies de roulement ou des glissières, décrivant chacune une section d'arc de cercle d'environ 120°, et
b) au moins une douille cylindrique (6),
c) les surfaces hélicoïdales étant fixées à la circonférence intérieure ou extérieure de la douille cylindrique (6) qui est au moins au nombre de une.

4. Pièce d'écartement selon la revendication 2, **caractérisée par**
a) trois surfaces hélicoïdales (4A, 4B, 4C) en colimaçon de la largeur approximative des voies de roulement ou des glissières, décrivant chacune une section d'arc de cercle d'environ 120°, et
b) deux douilles cylindriques concentriques (6, 6A) de diamètre différent,
c) les surfaces hélicoïdales étant fixées entre les douilles cylindriques (6, 6A).

5. Pièce d'écartement selon la revendication 2, **caractérisée par** trois surfaces hélicoïdales ascendantes en forme de colimaçon, de la largeur approximative des voies de roulement ou des glissières, décrivant chacune une section d'arc de cercle d'environ 120°, chacune des diverses surfaces hélicoïdales étant reliée à son extrémité supérieure à l'extrémité inférieure des surfaces hélicoïdales suivantes.

6. Pièce d'écartement selon la revendication 1, **caractérisée en ce que** les écarteurs (4A, 4B, 4C) présentent
a) une cage en forme de trois surfaces hélicoïdales ascendantes en forme de colimaçon, de la largeur approximative des voies de roulement ou des glissières, décrivant chacune une section d'arc de cercle d'environ 120,
b) la cage présentant des éléments de roulement reliés à elle de manière traditionnelle.

7. Pièce d'écartement selon la revendication 6, **caractérisée par**
a) au moins une douille cylindrique,
b) les surfaces hélicoïdales étant fixées à la circonférence intérieure ou extérieure de la douille cylindrique qui est au moins au nombre de une.

8. Pièce d'écartement selon la revendication 6, **caractérisée par**
a) deux douilles cylindriques concentriques de diamètre différent,
c) les surfaces hélicoïdales étant fixées entre les douilles cylindriques.

9. Pièce d'écartement selon la revendication 6, **caractérisée en ce que** les diverses surfaces hélicoïdales sont chacune reliées en leur extrémité supérieure à l'extrémité inférieure des surface hélicoïdales suivantes.

10. Pièce d'écartement selon l'une quelconque des revendications 2 à 5, **caractérisée en ce que** le matériau de glissement consiste en un alliage de bronze ou un plastique.

11. Pièce d'écartement selon l'une quelconque des revendications 6 à 9, **caractérisée en ce que** les éléments de roulement (8) sont des rouleaux ou des aiguilles.
